# EUROPEAN PATENT SPECIFICATION

(11) **EP 2 368 951 B1**
(45) Date of publication and mention of the grant of the patent: **14.11.2012**
(21) Application number: 11154274.2
(22) Date of filing: 14.02.2011
(51) Int. Cl.: C09D 201/08, C08F 2/18, C09G 1/16, C08K 3/00, C08K 5/00

(54) **Aqueous compositions with polyvalent metal cations and dispersed polymers**
Wässrige Zusammensetzungen mit polyvalenten Metallkationen und dispergierte Polymere
Compositions aqueuses avec cations de métaux polyvalents et polymères dispersés

(30) Priority: 16.03.2010 US 314232 P
(43) Date of publication of application: 28.09.2011
(73) Proprietor: Rohm and Haas Company, Philadelphia, Pennsylvania 19106-2399 (US)
(72) Inventor: Eldredge, Josephine Louise, Norristown, PA 19403 (US); Tysak, Theodore, Ambler, PA 19002 (US); Mercando, Paul, Pennsburg, PA 18073 (US)
(74) Representative: Buckley, Guy Julian

(56) References cited:
- EP-A1- 1 609 830
- WO-A1-2004/011567
- WO-A1-2008/011020
- US-A1- 2008 114 114

## Description

### BACKGROUND:

A variety of useful compositions contain at least one polymer dispersed in water and at least one polyvalent metal cation. In some of such compositions, the polymer has acid functionality. Such compositions are useful for a variety of purposes, for example as ingredients in leather treatments and floor polishes. In the past, many known examples of such compositions had relatively low level of polyvalent cation, even though, in some cases, the usefulness of such a composition would have been improved if the composition has a higher level of polyvalent metal cation. For example, floor polishes are thought to be more durable if higher levels of polyvalent metal cation are used. However, high levels of polyvalent metal cations sometimes cause instability in aqueous polymer dispersions, resulting in formation of gel or precipitate or both.

In the past, zinc cation has been commonly used, especially in floor polishes. Calcium is preferred over zinc because calcium is not as harmful as zinc is to the microorganisms in wastewater treatment facilities. It is sometimes difficult to incorporate high levels of calcium cation into an aqueous polymer dispersion because aqueous polymer dispersions containing calcium cation are even more prone to instability than aqueous polymer dispersions containing zinc cation.

US 2005/0288411 describes compositions that are useful as floor polishes and that contain polyvalent metal cations and dispersed polymers. It is desired to provide compositions with high levels of calcium while avoiding the problem of instability.

### STATEMENT OF THE INVENTION:

There is provided a method for making a composition, said method comprising
(a) first, forming at least one aqueous polymer dispersion by a process comprising polymerizing a monomer mix comprising 5-50% by weight based on the weight of said monomer mix, of one or more carboxylic acid functional monomers;
(b) second, adding to said aqueous polymer dispersion, ingredients comprising
   (i) 1 to 10 parts by weight of at least one swelling agent, based on 100 parts by weight of said monomer mix; and
   (ii) one or more nonionic surfactant, anionic surfactant, or mixture thereof; and
(c) third, adding calcium cation or magnesium cation or a mixture thereof to said aqueous polymer dispersion;
wherein, after the completion of said step (b) and prior to the beginning of said step (c), the ratio of equivalents of all polyvalent metal cations in said preliminary admixture to equivalents of carboxylic acid functional groups in said preliminary admixture is zero or is from 0 to 0.1; wherein, after the completion of said step (c), the ratio of equivalents of calcium ions and magnesium ions in said composition to the equivalents of carboxylic acid functional groups in said composition is 0.4 or more; and wherein, after the completion of said step (c), the ratio of equivalents of all polyvalent metal cations other than calcium and magnesium to equivalents of carboxylic acid functional groups in said composition is zero or is from 0 to 0.1

There is also provided a composition formed by that method.

### DETAILED DESCRIPTION:

As used herein "(meth)acrylate" and "(meth)acrylic" mean, respectively, "acrylate or methacrylate" and "acrylic or methacrylic." As used herein, a material is "aqueous" if that material contains at least 25% water by weight, based on the total weight of that material.

As used herein, a "dispersion" contains, sometimes among other ingredients, discrete particles that are suspended in a continuous medium. When the continuous medium contains at least 50% water by weight, based on the weight of the continuous medium, the dispersion is said to be an "aqueous dispersion," and the continuous medium is said to be an "aqueous medium." When at least some of the suspended discrete particles in the dispersion contain one or more polymers, the dispersion is said herein to be a "polymer dispersion." Thus, an "aqueous polymer dispersion" contains some polymer-containing particles suspended in a continuous medium that is at least 50% water. As used herein, when the term "polymer dispersion" is used, it is meant that the polymer contained in the suspended particles is not soluble in water.

As used herein, a "ratio" of two quantities is the number obtained by dividing the first quantity by the second quantity.

A polyvalent metal cation is a metal cation with charge of +2 or higher. Polyvalent metal cations are, for example, polyvalent cations of alkaline earth metals and polyvalent cations of transition metals.

The amount of polyvalent metal cation in the composition of the present invention is characterized by the number of equivalents. For each type of polyvalent metal cation that is present, the number of equivalents of that polyvalent metal cation is the number of moles of the cation that is present, multiplied by the valence of the cation. One mole of divalent metal cations provides two equivalents; one mole of trivalent metal cations provides three equivalents; and so on.

The polymer particles in a sample of an aqueous polymer dispersion have a variety of sizes. In some cases, the polymer particles are spherical or nearly spherical; in such cases their sizes can usefully be characterized by their diameters, and the group of polymer particles can be usefully characterized by the average diameter of the particles. One useful method of measuring the average diameter of the particles is light scattering. Preferably, the average diameter of the particles is 40 nm or larger; more preferably 50 nm or larger. Independently, preferably, the average diameter of the particles is more preferably 500 nm or smaller; more preferably 250 nm or smaller; more preferably 200 nm or smaller; more preferably 150 nm or smaller.

The polymer of the aqueous polymer dispersion of the present invention is formed by the polymerization of monomers; the aggregate of all monomers used to form the polymer is known herein as the "monomer mix." Monomers in the monomer mix may be of any type and may polymerized by any method or mechanism.

As used herein, when a certain quantity is said to be "based on weight of the monomer mix," what is meant is that the quantity is based on the sum of the weights of all monomers used in the monomer mix except for any multiethylenically unsaturated monomers (if any) that may be present in the monomer mix.

In the practice of the present invention, the monomer mix contains 5% or more by weight of methacrylic acid, based on the weight of the monomer mix. Preferably, the monomer mix contains 7% or more; more preferably 9% or more; more preferably 11 % or more; by weight of methacrylic acid, based on the weight of the monomer mix. In the practice of the present invention, the monomer mix contains 25% or less by weight of methacrylic acid, based on the weight of the monomer mix. Preferably, the monomer mix contains 25% or less; more preferably 18% or less; by weight of methacrylic acid, based on the weight of the monomer mix.

The monomer mix also contains one or more carboxylic acid functional monomer other than methacrylic acid. Carboxylic acid functional monomers are compounds capable of polymerization that contain at least one carboxylic acid group, and the carboxylic acid functional groups are not removed or altered during the process of polymerization. Preferred carboxylic acid functional monomers other than methacrylic acid are acrylic acid, itaconic acid, and mixtures thereof. Most preferred is itaconic acid.

Preferably, the amount of carboxylic acid functional monomer other than methacrylic acid is 0.1% to 5% by weight based on the weight of the monomer mix. More preferably, the amount of carboxylic acid functional monomer other than methacrylic acid is 0.5% or more; more preferably 1% or more. More preferably, the amount of carboxylic acid functional monomer other than methacrylic acid is 3% or less; more preferably 2% or less.

The monomer mix of the present invention contains monomers other than carboxylic acid functional monomers, known herein as "non-carboxyl monomers." The non-carboxyl monomer or monomers may be of any type that is capable of forming a copolymer with the carboxylic acid functional monomers that are used. Copolymer, as used herein, refers to a polymer made from two or more different monomers that react together to form a polymer. Copolymers may have any structure; for example, the different monomers may be arranged randomly, in a pattern (such as, for example, alternation), in blocks, in branches, in a star, or in any combination thereof.

Preferably, the monomer mix contains one or more vinyl aromatic monomers. Preferred vinyl aromatic monomers are alpha, beta monoethylenically unsaturated aromatic monomers. Preferred alpha, beta monoethylenically unsaturated aromatic monomers are styrene (Sty), vinyl toluene, 2-bromo styrene, o-bromo styrene, p-chloro styrene, o-methoxy styrene, p-methoxy styrene, allyl phenyl ether, allyl tolyl ether, alpha-methyl styrene, and mixtures thereof. Preferred are styrene, vinyl toluene and alpha-methyl styrene; most preferred is styrene.

Preferably, the monomer mix contains at least one vinyl aromatic monomer, in an amount by weight, based on the weight of the monomer mix, of 15% or more, more preferably 25% or more. Independently, preferably, the monomer mix contains at least one vinyl aromatic monomer, in an amount by weight, based on the weight of the monomer mix, of 70% or less, more preferably 60% or less.

Preferably, the monomer mix contains one or more alkyl esters of (meth)acrylic acid. The alkyl group in suitable alkyl esters of (meth)acrylic acid may be linear, branched, cyclic, or any combination or mixture thereof. Preferred alkyl groups are those in which the alkyl group has 20 or fewer carbon atoms, more preferably 12 or fewer carbon atoms, more preferably 8 or fewer carbon atoms. Preferred alkyl esters of (meth)acrylic acid are methyl methacrylate (MMA), methyl acrylate, ethyl acrylate, ethyl methacrylate, n-butyl acrylate (BA), butyl methacrylate (BMA), iso-butyl methacrylate (IBMA), 2-ethylhexyl acrylate, n-octyl acrylate, sec-butyl acrylate, cyclopropyl methacrylate, isobornyl methacrylate, and mixtures thereof. More preferably, the monomer mix contains BA, BMA, IBMA, MMA, or a mixture thereof.

Preferably, the amount of all alkyl esters of (meth)acrylic acid is, by weight, based on the weight of the monomer mix, 15% or more; more preferably 20% or more; more preferably 25% or more. Independently, preferably, the amount of all alkyl esters of (meth)acrylic acid is, by weight, based on the weight of the monomer mix, 75% or less; more preferably 65% or less.

Preferably, the monomer mix contains one or more multiethylenically unsaturated monomers (i.e., monomers having two or more ethylenically unsaturated groups). Preferred multiethylenically unsaturated monomers are divinylaromatic compounds; di-, tri-, and tetra-(meth)acrylate esters; di-, tri-, and tetra-allyl ether or ester compounds; and allyl (meth)acrylate. Preferred multiethylenically unsaturated monomers are divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). More preferred multiethylenically unsaturated monomers are DVB, ALMA, EGDMA, HDDA and BGDMA; most preferred is DVB.

Preferably, the amount of multiethylenically unsaturated monomer in the monomer mix, by weight based on the weight of the monomer mix, is at least 0.3%, more preferably at least 0.6%, more preferably at least 0.9%, more preferably at least 1.1%. In dependently, preferably, the amount of multiethylenically unsaturated monomer in the monomer mix, by weight based on the weight of the monomer mix, is no more than 3.5%, more preferably no more than 3%, more preferably no more than 2.5%.

The aqueous polymer dispersion of the present invention may be made by any of a wide variety of methods. In some embodiments, the polymer may be formed by any polymerization method and then dispersed in water. Preferably, the polymer is formed as suspended particles in an aqueous medium, for example, by suspension polymerization, emulsion polymerization, microemulsion polymerization, or a combination thereof.

Preferably, the aqueous polymer dispersion is formed by emulsion polymerization. More preferably, the aqueous polymer dispersion is formed by aqueous emulsion polymerization (i.e., emulsion polymerization in an aqueous medium). The aqueous emulsion polymerization is preferably performed by standard methods, including the use of one or more emulsifiers and one or more initiators. Aqueous emulsion polymerization is preferably conducted at pH less than 7. After completion of aqueous emulsion polymerization, the pH is preferably raised by addition of one or more base compounds; in the practice of the present invention, one or more steps may be performed after completion of polymerization and prior to raising the pH.

As stated herein above, "monomer mix" is contemplated herein to mean the aggregate of all monomers used to make the polymer of the present invention, regardless of the physical form in which the monomer mix is used. For example, in some embodiments, the monomer mix is provided as a single physical mixture in a single container. In some embodiments, the monomer mix is provided as two or more mixtures (which may be the same as each other or may be different from each other) of monomers in two or more different containers.

It is sometimes useful to characterize the aqueous polymer dispersion by its minimum film formation temperature MFT (also sometimes called "MFFT"). MFT can be measured, for example, by ASTM method D2354-98. When the aqueous polymer dispersion is dried, the minimum temperature necessary for the dry polymer to form a film is the MFT. In the practice of the present invention, it is useful to characterize the aqueous polymer dispersion in the absence of added swelling agent, added metal cation, and any other additive. In general, aqueous polymer dispersions of the present invention may have any MFT; a person practicing the present invention can readily choose an aqueous polymer dispersion with MFT appropriate for the intended use. Preferably, the aqueous polymer dispersion has MFT of 40°C or higher; more preferably 60°C or higher. Preferably, independently, the aqueous polymer dispersion has MFT of 100°C or lower; more preferably 80°C or lower.

It is useful to characterize polymer of the present invention by its glass transition temperature (Tg), which is measured by differential scanning calorimetry in the absence of added swelling agent, added metal cation, and any other additive. Preferably, the Tg of the polymer is 35°C or higher; more preferably 40°C or higher. Independently, preferably, the Tg of the polymer is 100°C or lower; more preferably 95°C or lower.

Preferably, the amount of polymer in the composition of the present invention is, by dry polymer weight based on the total weight of the composition, 30% or more; preferably 35% or more. Independently, preferably, the amount of polymer in the composition of the present invention is, by dry polymer weight based on the total weight of the composition, 50% or less; more preferably 45% or less, more preferably 40% or less.

The practice of the present invention involves the use of at least one swelling agent. A "swelling agent" as used herein is a compound that interacts with a polymer in a way that increases the flexibility of that polymer. Preferably, the swelling agent is an organic compound.

To test whether a compound of interest is suitable as a swelling agent for a particular aqueous polymer dispersion is to measure the MFT (as defined herein above) of that aqueous polymer dispersion with and without the presence of the compound of interest. That is, the MFT of the aqueous polymer dispersion itself is measured. Also, the compound of interest is admixed with the aqueous polymer dispersion, and the MFT of the admixture is measured. If the MFT of the admixture is lower than the MFT of the aqueous polymer dispersion itself, then the compound of interest is suitable as a swelling agent of the present invention.

Preferred swelling agents are solvents, plasticizers, coalescents, and mixtures thereof. Preferably, the swelling agent includes one or more plasticizers, one or more coalescents, or a mixture thereof.

Preferred swelling agents include alcohols, ether compounds, carboxylate esters, phosphate esters, amides, and mixtures thereof.

Preferred alcohols are aliphatic alcohols with 2 to 10 carbon atoms. More preferred alcohols are isopropanol, butanol, 2-ethylhexanol, and pine oil.

Preferred ether compounds are ether alcohols; alkyl and aromatic ethers of monoalkylene glycols and multialkylene glycols; and alkoxide compounds. As used herein, "multi-" means "di-" or "tri-" or higher; alkylene glycol means a glycol with 2 or 3 or more carbon atoms; and in the case of alkyl ethers, the alkyl group has 1, 2, or more carbon atoms. Preferred alkyl ethers of multialkylene glycols are diethylene glycol ethyl ether, dipropylene glycol methyl ether, and mixtures thereof. Preferred ether alcohols, which are compounds containing at least one ether link and at least one hydroxyl group, are 2-butoxy ethanol and butyl carbitol.

Alkoxide compounds have the formula represented by Formula (I) 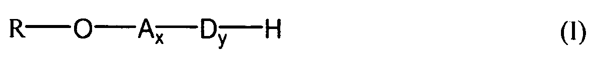 where each -A- is 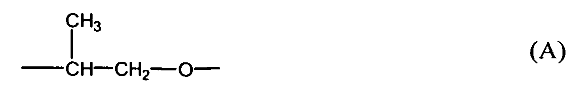 and each -D- is

-CH₂-CH₂-O- (D)

In Formula (I), the A and D moieties may be arranged as two blocks as shown in Formula (I) or they may have another arrangement such as, for example, blocks with D adjacent to R-O-, multiple blocks, random distribution, or alternation. In Formula (I), x is a real number within a range of from 0.5 to 500, and y is a real number within a range of from 0 to 500. Also in Formula (I), R is hydrogen or a hydrocarbon group with 1 to 20 carbon atoms, or a mixture of two or more hydrocarbon groups with 1 to 20 carbon atoms. Each hydrocarbon group may be linear aliphatic, cycloaliphatic, aromatic, or a combination thereof.

Carboxylate esters are compounds containing at least one ester link. "Mono-hydroxyl" compound as used herein is a compound with a single hydroxyl group. "Polyol" as used herein is a compound with two or more hydroxyl groups. "Monocarboxylic acid" as used herein is a compound with a single carboxylic acid group. "Multicarboxylic acid" as used herein is a compound with two or more carboxylic acid groups.

Preferred carboxylate esters are esters of mono-hydroxyl compounds and monocarboxylic acids; mono- and di-esters of mono-hydroxyl compounds and multicarboxylic acids; alkyl and aromatic mono- and di-esters of glycols and monocarboxylic acids; and mono-, di- and higher esters of alkyl polyols and monocarboxylic acids.

Preferred monocarboxylic acids include, for example, aromatic monocarboxylic acids (such as, for example, benzoic acid) and aliphatic monocarboxylic acids. Preferred aliphatic monocarboxylic acids are alkyl monocarboxylic acids with 3 to 8 carbon atoms. Preferred mono-hydroxyl compounds are mono-hydroxyl alkyl compounds with straight or branched alkyl groups with 3 to 13 carbon atoms. Preferred multicarboxylic acids are aromatic multicarboxylic acids (such as, for example, phthalic acid and trimellitic acid) and aliphatic multicarboxylic acids. Preferred aliphatic multicarboxylic acids are oxalic acid, fumaric acid, maleic acid, adipic acid, and pimelic acid. Preferred alkyl polyols are those with 4 or more, preferably 6 or more, preferably 8 or more, carbon atoms.

Preferred esters are mono- and di-alkyl esters of iso-octane diol, mono- and di-alkyl esters of butane diol, and mixtures thereof. A preferred mono-alkyl ester of iso-octane diol is 1,3-pentanediol, 2,2,4-trimethyl-, monoisobutyrate.

Preferred phosphate esters suitable as swelling agents are trialkyl phosphates (such as, for example, tri-2-ethylhexyl phosphate), triaryl phosphates (such as, for example, tricresyl phosphate), and mixed alkyl/aryl phosphates (such as, for example, 2-ethylhexyl diphenyl phosphate).

A preferred amide swelling agent is caprolactam.

Mixtures of preferred swelling agents are also preferred.

The amount of swelling agent used in the practice of the present invention can be characterized by the weight of swelling agent compared to the weight of the monomer mix. For 100 parts by weight of monomer mix, the preferred amount of swelling agent is 1 or more parts by weight, more preferably 2 or more parts by weight, more preferably 3 or more parts by weight, more preferably 4 or more parts by weight. Independently, for 100 parts by weight of monomer mix, the preferred amount of swelling agent is 10 or less parts by weight, more preferably 7 or less parts by weight, more preferably 5 or less parts by weight.

One or more surfactant is added to the composition after the formation of the aqueous polymer dispersion. Such surfactant is herein called "cosurfactant." Cosurfactant, if present, is in addition to any surfactants that may have been used in the production of the aqueous polymer dispersion.

Cosurfactants are preferably chosen to be compatible with the aqueous polymer dispersion so as to avoid coagulating or otherwise degrading the aqueous polymer dispersion. Cosurfactants are anionic surfactants, nonionic surfactants, or mixtures thereof. Preferred nonionic surfactants are alkoxylates, copolymers of ethylene oxide and propylene oxide, and mixtures thereof. Preferred alkoxylates are ethoxylates, which have the structure

R-O-(-CH₂CH₂O-)ₓ-H

where R- is an aliphatic group, an aromatic group, an aliphatic-substituted aromatic group, an aromatic-substituted aliphatic group, or a mixture thereof; and x is from 5 to 200. Preferably R- is alkyl or is alkyl-substituted benzene. When R- is alkyl-substituted benzene, R- has the structure R¹-R²-, where R¹ is a linear alkyl group and R² is an aromatic ring. One preferred cosurfactant in which R is alkyl-substituted benzene is octylphenol ethoxylate. When R- is an alkyl group, R- may be attached to the oxygen atom either at the end carbon or at another carbon. One preferred cosurfactant in which R is an alkyl group is lauryl alcohol ethoxylate. Mixtures of suitable cosurfactants are suitable.

The amount of cosurfactant can be characterized by the solid weight of cosurfactant compared to the weight of the monomer mix. For 100 parts by weight of monomer mix, the preferred amount of cosurfactant is 0.1 parts or more; more preferably 0.2 parts or more; more preferably 0.5 parts or more; more preferably 1 part or more. Independently, the amount of cosurfactant is preferably 10 parts or less; more preferably 8 parts or less; more preferably 5 parts or less.

In the practice of the present invention, the at least one swelling agent and the at least one cosurfactant are admixed with the aqueous polymer dispersion, and the result is herein called a "preliminary admixture."

The preliminary admixture contains little or no amount of polyvalent metal cation. As used herein, "little or no amount" of a polyvalent metal cation (or mixture of polyvalent metal cations) means that the ratio of the equivalents of that polyvalent metal cation (or the total equivalents of polyvalent metal cations in that mixture) either is zero or, if not zero, is from 0 to 0.1. Preferably the ratio of equivalents of polyvalent metal cation in the preliminary admixture to equivalents of carboxylic acid functional groups in the preliminary admixture is zero or is from 0 to 0.03; more preferably zero or from 0 to 0.01.

The preliminary admixture may be formed by any method. Preferably, the aqueous polymer dispersion is made and held at pH less than 7, and the preliminary admixture is made while the pH remains less than 7. Preferably, the aqueous polymer dispersion is brought to a temperature in the range of 18°C to 60°C, and the preliminary mixture is made while the temperature remains in that range; more preferably, the temperature range is 18°C to 50°C.

Preferably, some or all of the swelling agent is mixed with water and with some or all of the cosurfactant to form an aqueous emulsion, and then that aqueous emulsion is added to the aqueous polymer dispersion. Preferably, the addition of that aqueous emulsion to the aqueous polymer dispersion is performed at a steady rate for a period of time as short as 10 minutes or as long as one hour. Preferably, after the preliminary admixture is made, no further ingredients are added to it for a time period of 20 minutes or longer.

In the practice of the present invention, subsequent to forming the preliminary admixture, the preliminary admixture is admixed with at least one of calcium cations and magnesium cations to form a subsequent admixture. The composition of the present invention contains that subsequent admixture and, optionally, other ingredients. Calcium cations are preferred.

As used herein, the phrase "equivalents of calcium cations and magnesium cations" means the sum of the equivalents of calcium cations plus the sum of the equivalents of magnesium cations, whether the composition contains calcium ions alone, magnesium cations alone, or a mixture of calcium cations with magnesium cations.

In compositions of the present invention, the ratio of the equivalents of calcium cations and magnesium cations present in the composition to the equivalents of carboxyl groups (including both anionic carboxylate groups and neutral carboxyl groups) is 0.4 or higher. Preferably, that ratio is 0.5 or higher. Independently, preferably, that ratio is 1.2 or lower; or 1.0 or lower; or 0.9 or lower.

Preferably, the composition of the present invention contains little or no amount (as defined herein above) of zinc cation. Preferably, the composition of the present invention contains little or no amount of any polyvalent metal cation other than calcium and magnesium is used in the present invention. Preferably, the ratio of the equivalents of zinc cations in the composition of the present invention to equivalents of carboxylic acid groups in the composition of the present invention is zero or is from 0 to 0.03; preferably that ratio is zero or is from 0 to 0.01. Preferably, the ratio of the equivalents of polyvalent cations other than calcium and magnesium in the composition of the present invention to equivalents of carboxylic acid groups in the composition of the present invention is zero or is from 0 to 0.03; preferably that ratio is zero or is from 0 to 0.01.

The amounts of zinc cations and the amounts of polyvalent metal cations other than calcium and magnesium that are recited herein above as preferred in the composition of the present invention are also preferred at each point during the operation of the method of the present invention, from the completion of step (a) to the completion of the method of the present invention.

In some embodiments, the composition of the present invention also includes one or more basic salt of an alkaline metal. Basic salts of alkaline metals include, for example, sodium hydroxide, potassium hydroxide, sodium carbonate, potassium carbonate, and mixtures thereof. In some of the embodiments in which one or more basic salt of an alkaline metal is used, the molar ratio of polyvalent metal cation to alkaline metal in the composition is 0.1 to 10. In some embodiments, small amounts of alkaline metal are present in the composition; in such embodiments, the molar ratio of alkaline metal to polyvalent metal cation in the composition is 0.02 or less; or 0.01 or less; or 0.005 or less. In some embodiments, no basic salt of an alkaline metal is used.

While the invention is not limited to any particular mechanism or theory, it is contemplated that the polyvalent metal cations and the carboxylic acid functional groups are capable of interacting in a way that provides the effect of crosslinking of the polymer. The effect of crosslinking can, for example, provide one or more desirable properties to the dried layer of the composition, such as, for example, hardness, durability, other useful properties, or a combination thereof.

The compositions of the present invention are useful for a variety of purposes. For example, a composition of the present invention may be further admixed with one or more adjuvants, and the resulting composition may be suitable for use as a coating and is known as a coating material. Preferably, a coating material that contains a composition of the present invention plus further ingredients is suitable to coat a floor. Such a coating material is known herein as a "floor polish." Floor polishes contain one or more adjuvants; common adjuvants in floor polishes include, for example, wax emulsions, alkali soluble resins, wetting agents, emulsifying agents, dispersing agents, defoamers, leveling agents, and mixtures thereof.

It is useful to distinguish the composition of the present invention from a floor polish. While the composition of the present invention is useful as an ingredient in a floor polish, the composition of the present invention preferably is not itself useful as a floor polish. Preferably, the composition of the present invention has MFT of 40°C or higher; more preferably 50°C or higher. Independently, preferably the composition of the present invention has MFT of 100°C or lower; more preferably 95°C or lower. Independently, preferably, the composition of the present invention contains no wax or else contains wax in the amount of 1 % or less, by weight of solid wax based on the weight of polymer solids. More preferably, the composition of the present invention contains no wax.

Independently, preferably, the composition of the present invention contains no phosphate leveling agent or else contains phosphate leveling agent in the amount of 1 % or less, by weight of solid phosphate leveling agent, based on the weight of polymer solids. More preferably, the composition of the present invention contains no phosphate leveling agent. More preferably, the composition of the present invention contains no leveling agent.

The composition of the present invention preferably does not contain any of the floor polish adjuvants discussed herein above, other than the materials specifically stated herein above as being included in the composition and the materials used to accomplish the polymerization of the polymer.

### EXAMPLES

Abbreviations:

| | | | | |
|---|---|---|---|---|
| IA = | itaconic acid | | MM = | monomer mix |
| DVB = | divinylbenzene | | Mon = | monomer |
| MMA = | methyl methacrylate | | BA = | n-butyl acrylate |
| Sty = | styrene | | BMA = | n-butyl methacrylate |
| pbw = | parts by weight | | MAA = | methacrylic acid |

- Tx =: TEXANOL^{™} ester alcohol, 1,3-pentanediol, 2,2,4-trimethyl-, monoisobutyrate, (from Eastman Chemical)
- S1 =: Lipocol^{™} LA-23 surfactant, lauryl alcohol ethoxylated (23 moles ethylene oxide), from Thornley Co.
- S2 =: Thorcowet^{™} TDA-40 surfactant, isotridecyl alcohol C13 with 40 moles ethylene oxide, from Thornley Co.

### Example 1: Preparation of Latex Polymer

The following monomer mixes were used to make polymer, using standard techniques of aqueous emulsion polymerization. The result of each polymerization is a dispersion of polymer particles in water, with pH less than 7.

**Table 1**

| | **MM1** | **MM2** | **MM3** | **MM4** |
|---|---|---|---|---|
| Monomer No. 1 name | BA | BA | BA | BA |
| Monomer No. 1 pbw | 20 | 30 | 20 | 20 |
| Monomer No. 2 name | Sty | Sty | Sty | Sty |
| Monomer No. 2 pbw | 45 | 45 | 40 | 40 |
| Monomer No. 3 name | BMA | MMA | MMA | MMA |
| Monomer No. 3 pbw | 21 | 11 | 26 | 24 |
| Monomer No. 4 name | MAA | MAA | MAA | MAA |
| Monomer No. 4 pbw | 12.1 | 12.1 | 12.1 | 14.1 |
| Monomer No. 5 name | IA | IA | IA | IA |
| Monomer No. 5 pbw | 1.9 | 1.9 | 1.9 | 1.9 |
| Monomer No. 6 name | DVB | DVB | DVB | DVB |
| Monomer No. 6 pbw | 1.3 | 1.9 | 1.3 | 1.3 |
| | | | | |
| Polymer Name | **P1** | **P2** | **P3** | **P4** |

### Example 2: Preparation of preliminary mixture:

The dispersion of polymer particles was mixed with swellant and cosurfactant as follows. Cosurfactant and swelling agent were combined via shaking or stirring until an aqueous emulsion was formed. In the cases where swelling agent was not used, the cosurfactant was diluted with water such that the solids were 22-24%. In the case where cosurfactant was not used, the swelling agent was added without further dilution. In all instances, at the end of the polymerization, the aqueous polymer dispersion was at 50°C. The aqueous polymer dispersion was cooled to 39°C, and the preliminary mixture was then gradually added at a steady rate over 30 minutes and then held for 20 minutes.

### Example 3: Preparation of subsequent mixture:

Ca or Mg cations were added as follows. The resulting dispersion of polymer particles was neutralized with aqueous ammonia to pH 7.5-8.0 over a period of 20 minutes at 39°C. The polymer was then held for an additional 20 minutes prior to the addition of calcium or magnesium. A 30% slurry of calcium hydroxide or magnesium oxide was prepared with the addition of 2% dispersant. The slurry was then slowly added to the polymer over 30-60 minutes at 39°C and then held at temperature for an addition 60 minutes.

### Example 4: Example Mixtures and Evaluations Thereof:

Using the methods described in Examples 1, 2, and 3, the following example mixtures were made and evaluated.

The polymer resulting from Example 3 was then cooled to ambient temperature (20°C to 25°C) and a portion of each mixture was passed through a screen of mesh number 100 (opening size 150 micrometer). The amount of material trapped on the screen was dried and measured and reported as ppm (parts per million by weight, based on the wet weight of the composition poured through the screen). The liquid that passed through the 100 mesh screen was then passed through a screen of mesh size 325 (opening size 45 micrometer), and the material trapped on the screen was again dried and measured. Material trapped on the screen is known herein as "gel."

Each mixture was allowed to stand at ambient temperature (20°C to 25°C) for a minimum of 7 days. The mixtures were then evaluated visually for the amount of precipitate. Precipitate was rated "neg" (negligible), "mod" (moderate), "m/h" (moderate to heavy"), or "hvy" (heavy).

Samples with "C" in the Example number are comparative examples. The results were as follows:

**Table 2**

| **Example No.:** | **1** | **2C** | **3** | **4** | **5C** | **6** | **7C** |
|---|---|---|---|---|---|---|---|
| Polymer | P1 | P1 | P2 | P3 | P4 | P3 | P3 |
| Cation | Mg | Mg | Ca | Ca | Ca | Ca | Ca |
| Cation equiv.⁽¹⁾ | 0.4 | 0.4 | 0.4 | 0.48 | 0.58 | 0.58 | 0.58 |
| Swellant⁽²⁾ | Tx | none | Tx | Tx | none | Tx | Tx |
| Cosurfactant | S1 | S2 | S1 | S1 | S2 | S1 | none |
| Cosurfactant %⁽³⁾ | 3% | 1.6% | 3% | 3% | 1.6% | 3% | 0 |

| **Results:** | | | | | | | |
|---|---|---|---|---|---|---|---|
| Precipitate | neg | mod | neg | neg | hvy | neg | m/h |
| gel on 100 mesh | 16 | 9 | 7 | 101 | 4 | 133 | 8,684 |
| gel on 325 mesh | 5 | 1 | 10 | 12 | 12 | 11 | 266 |

| | | | | | | | |
|---|---|---|---|---|---|---|---|
| Note 1: ratio of equivalents of cations to equivalents of carboxylic acid groups. Note 2: all swellant was used at 4% by weight, based on the weight of the monomer mix. Note 3: by weight of solid cosurfactant, based on weight of the monomer mix. | | | | | | | |

The inventive examples all had acceptable precipitate and gel. The comparative examples all had unacceptable precipitate, and some comparative examples also had unacceptable gel.

## Claims

1. A method of forming an aqueous composition, said method comprising
(a) first, forming at least one aqueous polymer dispersion by a process comprising polymerizing a monomer mix comprising 5-50% by weight based on the weight of said monomer mix, of one or more carboxylic acid functional monomers;
(b) second, adding to said aqueous polymer dispersion, ingredients comprising
(i) 1 to 10 parts by weight of at least one swelling agent, based on 100 parts by weight of said monomer mix; and
(ii) one or more nonionic surfactant, anionic surfactant, or mixture thereof; and
(c) third, adding calcium cation to said aqueous polymer dispersion;
wherein, after the completion of said step (b) and prior to the beginning of said step (c), the ratio of equivalents of all polyvalent metal cations in said preliminary admixture to equivalents of carboxylic acid functional groups in said preliminary admixture is zero or is from 0 to 0.1;
wherein, after the completion of said step (c), the ratio of equivalents of calcium ions in said composition to the equivalents of carboxylic acid functional groups in said composition is 0.4 or more; and
wherein, after the completion of said step (c), the ratio of equivalents of all polyvalent metal cations other than calcium and magnesium to equivalents of carboxylic acid functional groups in said composition is zero or is from 0 to 0.1.

2. The method of claim 1, wherein said monomer mix comprises 7-18% by weight based on the weight of said monomer mix, of one or more carboxylic acid functional monomers.

3. The method of claim 1, wherein said ratio of equivalents of calcium ions in said composition to equivalents of carboxylic acid functional groups in said composition is 0.55 or more.

4. The method of claim 1, wherein said swelling agent comprises at least one compound selected from the group consisting of plasticizers and coalescents.

5. The method of claim 1, wherein the pH of said aqueous polymer dispersion is less than 7 at the end of said step (a), wherein the pH remains less than 7 during said step (b), and wherein the pH is raised to a value above 7 prior to performing said step (c).

6. The method of claim 1, wherein the temperature of said aqueous polymer dispersion is 60°C or less during said step (b).

7. The method of claim 1, wherein said step (b) is performed by a process comprising adding an aqueous emulsion of said swelling agent and said nonionic surfactant to said aqueous polymer dispersion.

8. The method of claim 7, wherein said adding of said aqueous emulsion of said swelling agent and said nonionic surfactant to said aqueous polymer dispersion is performed at a steady rate of addition over a period of 10 to 60 minutes.

9. The method of claim 1, wherein the amount of polymer solids in said composition is 30% to 45%, by weight based on the total weight of said composition.

10. An aqueous composition formed by the method of claim 1.

11. An aqueous composition formed by the method as claimed in any one of claims 1 to 9, wherein said composition contains 1 wt% or less of phosphate leveling agent based on the weight of polymer solids.

12. An aqueous composition formed by the method as claimed in any one of claims 1 to 9, wherein the amount of polymer in said aqueous composition is 30% or more by dry weight based on the total weight of said composition.

13. An aqueous composition formed by the method as claimed in any one of claims 1 to 9, wherein said composition contains swelling agent in an amount of from 3 to 10 parts by weight based on 100 parts by weight of said monomer mix.

## Patentansprüche

1. Verfahren zum Bilden einer wässrigen Zusammensetzung, wobei das Verfahren umfaßt:
a) erstens, das Bilden mindestens einer wässrigen Polymerdispersion durch ein Verfahren, umfassend das Polymerisieren eines Monomergemisches, umfassend 5-50 Gew.-%, bezogen auf das Gewicht des Monomergemisches, von einem oder mehreren Carbonsäure-funktionalen Monomeren,
b) zweitens, das Zugeben von Bestandteilen, umfassend
(i) 1 bis 10 Gew.-Teile mindestens eines Quellungsmittels, basierend auf 100 Gew.-Teilen des Monomergemisches, und
(ii) ein oder mehrere nicht-ionische grenzflächenaktive Mittel, anionische grenzflächenaktive Mittel oder Gemische davon, zu der wässrigen Polymerdispersion, und
(c) drittens, das Zugeben von Calciumkationen zu der wässrigen Polymerdispersion,
wobei nach der Vervollständigung des Schrittes (b) und vor dem Beginn des Schrittes (c) das Verhältnis der Äquivalente von sämtlichen mehrwertigen Metallkationen in dem vorhergehenden Gemisch zu den Äquivalenten an Carbonsäure-funktionalen Gruppen in dem vorhergehenden Gemisch Null oder von 0 bis 0,1 ist,
wobei nach der Vervollständigung des Schrittes (c) das Verhältnis der Äquivalente an Calciumionen in der Zusammensetzung zu den Äquivalenten an Carbonsäure-funktionalen Gruppen in der Zusammensetzung 0,4 oder mehr ist und
wobei nach der Vervollständigung des Schrittes (c) das Verhältnis an Äquivalenten sämtlicher mehrwertiger Metallkationen, die von Calcium und Magnesium verschieden sind, zu Äquivalenten an Carbonsäure-funktionalen Gruppen in der Zusammensetzung Null oder von 0 bis 0,1 ist.

2. Verfahren gemäß Anspruch 1, wobei das Monomergemisch 7-18 Gew.-%, bezogen auf das Gewicht des Monomergemisches, von einem oder mehreren Carbonsäure-funktionalen Monomeren umfaßt.

3. Verfahren gemäß Anspruch 1, wobei das Verhältnis an Äquivalenten von Calciumionen in der Zusammensetzung zu Äquivalenten an Carbonsäure-funktionalen Gruppen in der Zusammensetzung 0,55 oder mehr beträgt.

4. Verfahren gemäß Anspruch 1, wobei das Quellungsmittel mindestens eine Verbindung, ausgewählt aus der Gruppe, bestehend aus Weichmachern und Koaleszenzmitteln, umfaßt.

5. Verfahren gemäß Anspruch 1, wobei der pH der wässrigen Polymerdispersion weniger als 7 an dem Ende des Schritts (a) ist, wobei der pH weniger als 7 während des Schritts (b) verbleibt und wobei der pH auf einen Wert von oberhalb 7 vor der Durchführung des Schritts (c) angehoben wird.

6. Verfahren gemäß Anspruch 1, wobei die Temperatur der wässrigen Polymerdispersion 60°C oder weniger während des Schritts (b) ist.

7. Verfahren gemäß Anspruch 1, wobei der Schritt (b) durch ein Verfahren durchgeführt wird, umfassend das Zugeben einer wässrigen Emulsion des Quellungsmittels und des nicht-ionischen grenzflächenaktiven Mittels zu der wässrigen Polymerdispersion.

8. Verfahren gemäß Anspruch 7, wobei das Zugeben der wässrigen Emulsion des Quellungsmittels und des nicht-ionischen grenzflächenaktiven Mittels zu der wässrigen Polymerdispersion mit einer konstanten Zugaberate über eine Zeitdauer von 10 bis 60 Minuten durchgeführt wird.

9. Verfahren gemäß Anspruch 1, wobei die Menge an Polymerfeststoffen in der Zusammensetzung 30 Gew.-% bis 45 Gew.-%, bezogen auf das Gesamtgewicht der Zusammensetzung, beträgt.

10. Wässrige Zusammensetzung, gebildet durch das Verfahren gemäß Anspruch 1.

11. Wässrige Zusammensetzung, gebildet durch das Verfahren, wie in einem der Ansprüche 1 bis 9 beansprucht, wobei die Zusammensetzung 1 Gew.-% oder weniger Phosphat-Egalisierungsmittel, bezogen auf das Gewicht der Polymerfeststoffe, enthält.

12. Wässrige Zusammensetzung, gebildet durch das Verfahren gemäß einem der Ansprüche 1 bis 9, wobei die Menge an Polymer in der wässrigen Zusammensetzung 30% oder mehr, bezogen auf das Trockengewicht, basierend auf dem Gesamtgewicht der Zusammensetzung, beträgt.

13. Wässrige Zusammensetzung, gebildet durch das Verfahren, wie in einem der Ansprüche 1 bis 9 beansprucht, wobei die Zusammensetzung Quellungsmittel in einer Menge von 3 bis 10 Gew.-Teilen, bezogen auf 100 Gew.-Teile des Monomergemisches, enthält.

## Revendications

1. Procédé de formation d'une composition aqueuse, ledit procédé comprenant
(a) tout d'abord, la formation d'au moins une dispersion aqueuse de polymère par un procédé comprenant la polymérisation d'un mélange de monomères comprenant 5-50 % en poids sur la base du poids dudit mélange de monomères, d'un ou plusieurs monomères acide carboxylique-fonctionnels ;
(b) deuxièmement, l'addition à ladite dispersion aqueuse de polymère, d'ingrédients comprenant
(i) 1 à 10 parties en poids d'au moins un agent gonflant, sur la base de 100 parties en poids dudit mélange de monomères ; et
(ii) un ou plusieurs tensioactifs non ioniques, tensioactifs anioniques, ou mélange de ceux-ci ; et
(c) troisièmement, l'addition d'un cation calcium à ladite dispersion aqueuse de polymère ;
où, après la fin de ladite étape (b) et avant le début de ladite étape (c), le rapport d'équivalents de tous les cations métalliques multivalents dans ledit mélange préliminaire aux équivalents de groupes fonctionnels acide carboxylique dans ledit mélange préliminaire est zéro ou est de 0 à 0,1 ;
où, après la fin de ladite étape (c), le rapport d'équivalents d'ions calcium dans ladite composition aux équivalents de groupes fonctionnels acide carboxylique dans ladite composition est 0,4 ou plus ; et
où, après la fin de ladite étape (c), le rapport d'équivalents de tous les cations métalliques multivalents différents du calcium et du magnésium aux équivalents de groupes fonctionnels acide carboxylique dans ladite composition est zéro ou est de 0 à 0,1.

2. Procédé selon la revendication 1, où ledit mélange de monomères comprend 7-18 % en poids sur la base du poids dudit mélange de monomères d'un ou plusieurs monomères acide carboxylique-fonctionnels.

3. Procédé selon la revendication 1, où ledit rapport d'équivalents d'ions calcium dans ladite composition aux équivalents de groupes fonctionnels acide carboxylique dans ladite composition est 0,55 ou plus.

4. Procédé selon la revendication 1, où ledit agent gonflant comprend au moins un composé choisi dans le groupe consistant en les plastifiants et les agents de coalescence.

5. Procédé selon la revendication 1, où le pH de ladite dispersion aqueuse de polymère est inférieur à 7 à la fin de ladite étape (a), où le pH reste inférieur à 7 pendant ladite étape (b), et où le pH est augmenté jusqu'à une valeur supérieure à 7 avant de réaliser ladite étape (c).

6. Procédé selon la revendication 1, où la température de ladite dispersion aqueuse de polymère est 60°C ou moins pendant ladite étape (b).

7. Procédé selon la revendication 1, où ladite étape (b) est accomplie par un procédé comprenant l'addition d'une émulsion aqueuse dudit agent gonflant et dudit tensioactif non ionique à ladite dispersion aqueuse de polymère.

8. Procédé selon la revendication 7, où ladite addition de ladite émulsion aqueuse dudit agent gonflant et dudit tensioactif non ionique à ladite dispersion aqueuse de polymère est accomplie à un débit d'addition constant sur une période de 10 à 60 minutes.

9. Procédé selon la revendication 1, où la quantité de solides de polymère dans ladite composition est 30 % à 45 %, en poids sur la base du poids total de ladite composition.

10. Composition aqueuse formée par le procédé selon la revendication 1.

11. Composition aqueuse formée par le procédé selon l'une quelconque des revendications 1 à 9, où ladite composition contient 1 % en poids ou moins d'agent nivelant phosphate sur la base du poids des solides du polymère.

12. Composition aqueuse formée par le procédé selon l'une quelconque des revendications 1 à 9, où la quantité de polymère dans ladite composition aqueuse est 30 % ou plus en poids sec sur la base du poids total de ladite composition.

13. Composition aqueuse formée par le procédé selon l'une quelconque des revendications 1 à 9, où ladite composition contient un agent gonflant en une quantité de 3 à 10 parties en poids sur la base de 100 parties en poids dudit mélange de monomères.
